Europäisches Patentamt

European Patent Office

Office européen des brevets

(11) Publication number: **0 177 074**
**B1**

(12) **EUROPEAN PATENT SPECIFICATION**

(45) Date of publication of patent specification: **18.01.89**

(51) Int. Cl.⁴: **B 62 D 31/02**

(21) Application number: **85201345.7**

(22) Date of filing: **23.08.85**

(54) Motor-bus body.

(30) Priority: **28.08.84 NL 8402620**

(43) Date of publication of application:
**09.04.86 Bulletin 86/15**

(45) Publication of the grant of the patent:
**18.01.89 Bulletin 89/03**

(84) Designated Contracting States:
**CH DE FR GB IT LI NL SE**

(56) References cited:
**FR-A- 962 389**
**FR-A-2 373 433**

(73) Proprietor: **Botz, Hans Dietrich Peter Friedrich**
**Landschrijversveld 519**
**NL-5403 EM Uden (NL)**

(72) Inventor: **Botz, Hans Dietrich Peter Friedrich**
**Landschrijversveld 519**
**NL-5403 EM Uden (NL)**

(74) Representative: **Timmermans, Anthonius C.Th.,
Ir. et al
European Patent Attorneys Octrooibureau Zuid
P.O. Box 2287
NL-5600 CG Eindhoven (NL)**

Courier Press, Leamington Spa, England.

## Description

The invention relates to a motor-bus body provided with a front structure, the driver's seat and the controls, the body being assembled from a number of detached elements, each element being provided with a roof pane, a side panel and a pillar connecting both panels.

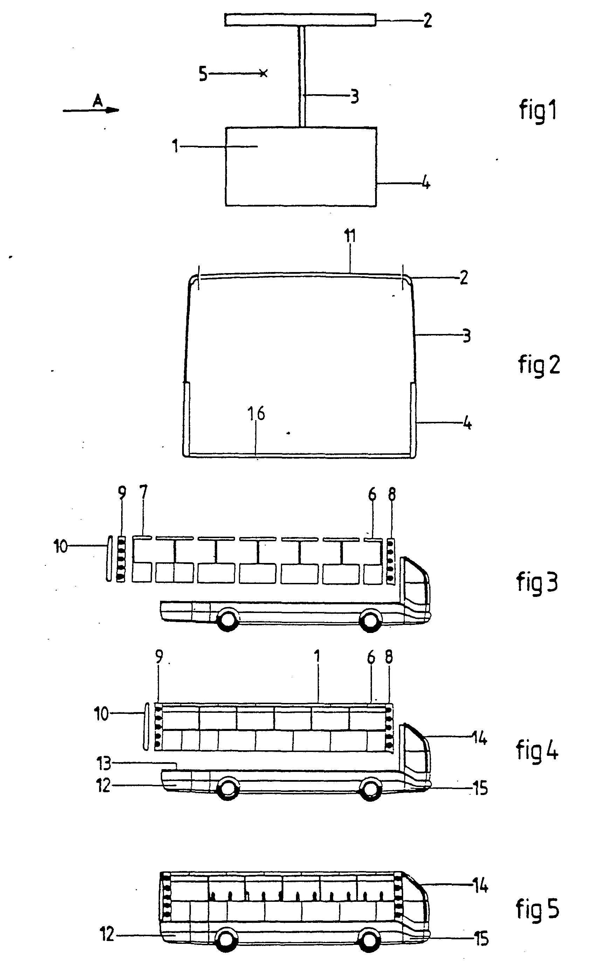

Such a motor-bus body is known from the French Patent 962,389 disclosing the assembling on a bus body from detached elements, consisting of a roof panel, a side panel and a pillar connecting both the panels (see Fig. 3).

In the construction of motor-bus bodies it is necessary for the body builder to await the delivery of the chassis by the chassis maker, before he can start building the body. This implies that the chassis has to stay with the body builder for quite some time before its delivery to the customer. This procedure entails a great loss of interest on the capital invested.

The object of the present invention is to provide a solid, mechanically stable and safe motor-bus body, consisting of a number of equal or similar elements, which can be fixed together in relatively simple fashion to form a whole, separately from the chassis.

According to the first embodiment of the present invention, the end in view is achieved by positioning the pillar in such a way as to divide the space between the roof panel and the side panel in two open spaces formed on both sides of the pillar, whereby each open space together with the corresponding open space of the adjacent element constitutes the window opening in the side wall of the body and by applying the elements on a chassis with a flat or substantially flat floor.

It is an important understanding of the present invention that the special choice of the position of the pillar and the corresponding place of the window openings, leads to a special type of element where the transverse seam between adjacent elements is interrupted. This considerably increases the solidity, stability and safety of the motor-bus body according to the invention.

A second embodiment of the motor-bus body according to the invention is characterized in that at both ends of a series of elements half elements are mounted which together with the adjacent whole elements form openings in the side wall of the body. Beneficially, even the ends of a series of assembled elements, according to the invention have an interrupted transverse seam and accordingly, form a solid and safe whole with the assembled elements.

A third embodiment of the motor-bus body according to the invention is characterized in that terminal sections have been installed between the front structure and the one half element as well as between the back wall and the other half element, which terminal sections fill up the spaces between the said structural parts and the assembled elements. These terminal sections further contribute to the solidity and to the mechanical stability of the motor-bus while applying the motor-bus body according to the invention to it.

A fourth embodiment of the motor-bus body according to the invention is characterized in that the terminal sections form the enclosing members between which the separate elements are held in place so as the form a whole. Confining the assembled elements in between the enclosing members further contributes to the solidity and the mechanical stability of the assembled elements as a whole.

A fifth embodiment of the motor-bus body according to the invention is characterized in that the terminal sections are designed as dimensionally stable roll-over bars. By applying roll-over bars the safety of the occupants is considerably enhanced, in particular in the event of accidents in which the vehicle overturns.

An embodiment of a motor-bus having a body according to the present invention is illustrated schematically in the accompanying figures, in which:

Figure 1 represents a side elevation of a body element;

Figure 2 depicts such an element provided with an optionally flat floor element in front elevation in the direction of arrow A from Figure 1;

Figure 3 shows a chassis with front structure, whilst above the chassis floor the component parts of the body are represented as detached units, comprising the elements, bounded in front and at the rear by a half element, the terminal sections and the back wall;

Figure 4 shows the assembled body before it is mounted on the chassis; and

Figure 5 depicts the fully finished motor-bus.

In the figures, an element 1 consists of a roof panel 2 and a pillar 3 between the roof panel 2 and a side panel 4. The opening 5 formed on both sides of the pillar 3 between the roof panel 2 and the side panel 4 is bounded all round by grooves, and together with the corresponding opening of the adjacent element it constitutes the window opening in the side wall of the motor-bus body. Optionally the element 1 may contain a floor element 16.

Also shown in the drawings are the half elements 6 and 7 at the front and rear, respectively, of the series of elements 1. These half elements likewise consist of a roof panel, a pillar and a side panel and are intended to complete the window frames of the adjacent whole elements.

The terminal sections, designated 8 and 9, primarily form the means of enclosing and connecting the elements together. Over and above this, they connect the series of elements to the front structure and the back wall 10, respectively, and have, in addition, been designed as dimensionally stable roll-over bars guarding against deformation in case of accidents.

The back wall 10 acts at the same time as a reinforcement against distortion of the tubular body formed by the elements. Figure 2 also shows a top plate 11. This may be designed as one top plate per element, but also as one continuous top for the entire series of elements 1.

The chassis unit comprises the actual chassis 12 with flat floor 13 and the front structure 14 which houses the driver's compartment and which is provided with means of entry 15. The assembly of series of elements 1 is subsequently mounted on the flat floor 13 of the chassis 12.

The application of elements according to the invention not only ensures that the body builder can manufacture bodies in advance so as to greatly reduce the time required between the receipt of the chassis and the delivery of the completed bus, but also opens up the possibility of assembling motor-buses of smaller length with the use of a smaller number of elements in the same brief period of time.

## Claims

1. A motor-bus body provided with a front structure (14), the driver's seat and the controls, the body being assembled from a number of detached elements (1), each element (1) being provided with a roof panel (2), a side panel (4) and a pillar (3) connecting both panels (2, 4), characterized in that the pillar (3) is positioned in such a way as to divide the space between the roof panel and the side panel in two open spaces (5) formed on both sides of the pillar (3), whereby each open space (5) together with the corresponding open space (5) of the adjacent element (1) constitutes the window opening in the side wall of the body and in that the elements (1) are applied on a chassis (12) with a flat or substantially flat floor (13).

2. A motor-bus body according to claim 1, characterized in that at both ends of a series of elements half elements (6, 7) are mounted which together with the adjacent whole elements (1) form openings (5) in the side wall of the body.

3. A motor-bus body according to claim 2, characterized in that terminal sections (8, 9) have been installed between the front structure (14) and the one half element (6) as well as between the back wall (10) and the other half element (7), which terminal sections (8, 9) fill up the spaces between the said structural parts (10, 14) and the assembled elements.

4. A motor-bus body according to claim 3, characterized in that the terminal sections (8, 9) form the enclosing members between which the separate elements are held in place so as the form a whole.

5. A motor-bus body according to claim 3 or 4, characterized in that the terminal sections (8, 9) are designed as dimensionally stable roll-over bars.

6. A motor-bus body according to any one of the claims 3 to 5, characterized in that the back wall (10) is designed as a dimensionally stable part in such a manner that it forms the means whereby distortion of the body is obviated.

## Patentansprüche

1. Omnibuskarosserie, versehen, mit einer Front (14), dem Fahrersitz und den Bedienungsorganen, wobei die Karosserie aus einer Reihe von einzelnen Elementen (1) zusammengesetzt ist, und jedes Element (1) ein Dachpaneel (2), ein Seitenpaneel (4) und eine Säule (3) hat, die die beiden Paneele (2, 4) verbindet, dadurch gekennzeichnet, daß die Säule (3) so angeordnet ist, daß sie den Raum zwischen dem Dachpaneel und dem Seitenpaneel in zwei offene Räume (5) zu beiden Seiten der Säule aufteilt, wobei jeder offene Raum (5) zusammen mit dem entsprechenden Raum des angrenzenden Elementes (1) die Fensteröffnung in der Seitenwand der Karosserie bildet und die Elemente (1) auf einem Chassis (12) mit flachem oder nahezu flachem Boden (13) angebracht sind.

2. Omnibuskarosserie nach Anspruch 1, dadurch gekennzeichnet, daß zu beiden Enden einer Reihe von Elementen halbe Elemente (6, 7) angebracht sind, die zusammen mit den angrenzenden ganzen Elementen (1) Öffnungen in der Seitenwand der Karosserie bilden.

3. Omnibuskarosserie nach Anspruch 2, dadurch gekennzeichnet, daß die Endstücke (8, 9) zwischen die Front (14) und das eine halbe Element (6) und ebenfalls zwischen die Heckwand (10) und das andere halbe Element (7) gestellt worden sind, welche Endstücke (8, 9) die Räume zwischen den genannten Bauteilen (10, 14) und der Gesamtheit der Elemente auffüllen.

4. Omnibuskarosserie nach Anspruch 3, dadurch gekennzeichnet, daß die Endstücke (8, 9) die Einschlußorgane bilden, zwischen denen die einzelnen Elemente an ihrem jeweiligen Platz festgehalten werden, um somit ein Ganzes zu bilden.

5. Omnibuskarosserie nach Anspruch 3 oder 4, dadurch gekennzeichnet, daß die Endstücke (8, 9) als formstabile überrollbügel ausgestaltet worden sind.

6. Omnibuskarosserie nach einem oder mehreren der Ansprüche 3 bis 5, dadurch gekennzeichnet, daß die Heckwand (10) so als ein formstabiler Teil ausgestaltet worden ist, daß dadurch die Verformung der Karosserie vermieden wird.

## Revendications

1. Carrosserie d'autobus pourvue d'un front avant (14), du siège pour le conducteur et des organes de commande, cette corrosserie étant composée d'un ensemble d'éléments (1), et chaque élément (1) comportant un panneau de toit (2), un panneau latéral (4) et un montant (3) qui unit les deux panneaux (2, 4), avec la caractéristique que le montant (3) est placé de telle façon qu'il partage l'espace entre le panneau de toit et le panneau latéral en deux espaces (5) ouverts de chaque côté du montant (3), chaque espace (5) formant avec l'espace correspondant de l'élément (1) adjacent l'ouverture pour la vitre dans la paroi latérale de la carrosserie, et que les élément (1) sont montés sur un chassis (12) avec un plancher (13) plan ou pratiquement plan.

2. Carrosserie d'autobus selon la revendication 1, avec la caractéristique qu'à chacune des deux extrémités d'une série d'éléments, se trouvent des demi-éléments (6, 7), lesquels avec les éléments entiers (1) adjacents, forment des ouvertures (5) dans la paroi latérale de la carrosserie.

3. Carrosserie d'autobus selon la revendication 2, avec la caractéristique que les pièces d'extrémités (8, 9) sont montées entre le front avant (14) et l'un des demi-éléments (6), ainsi qu'entre la paroi arrière (10) et l'autre demi-élément (7), lesquelles pièces d'extrémités (8, 9) remplissent l'espace entre lesdits éléments de construction (10, 14) et l'ensemble d'éléments.

4. Carrosserie d'autobus selon la revendication 3, avec la caractéristique que les pièces d'extrémités (8, 9) forment les organes de verrouillage entre lesquels les éléments séparés sont maintenus en place pour former ainsi un tout.

5. Carrosserie d'autobus selon les revendications 3 ou 4, avec la caractéristique que les pièces d'extrémités (8, 9) sont exécutées comme arceaux de renforcement indéformables.

6. Carrosserie d'autobus selon une ou plusieurs des revendications 3 à 5, avec la caractéristique que la paroi arrière (10) est réalisée comme une partie indéformable de telle sorte qu'on évite par ce moyen la déformation de la carrosserie.

fig 1

fig 2

fig 3

fig 4

fig 5